# EUROPÄISCHE PATENTSCHRIFT

(11) **EP 3 167 778 B1**
(45) Veröffentlichungstag und Bekanntmachung des Hinweises auf die Patenterteilung: **08.08.2018**
(21) Anmeldenummer: 16198162.6
(22) Anmeldetag: 10.11.2016
(51) Int. Cl.: A47J 31/60

(54) **GETRÄNKEBEREITUNGSVORRICHTUNG**
BEVERAGE PREPARATION DEVICE
DISPOSITIF DE PRÉPARATION DE BOISSONS

(30) Priorität: 13.11.2015 EP 15405073
(43) Veröffentlichungstag der Anmeldung: 17.05.2017
(73) Patentinhaber: JURA Elektroapparate AG, 4626 Niederbuchsiten (CH)
(72) Erfinder: BÜTTIKER, Philipp, 4625 Oberbuchsiten (CH)
(74) Vertreter: EGLI-EUROPEAN PATENT ATTORNEYS

(56) Entgegenhaltungen:
- EP-A1- 2 702 908
- EP-A2- 2 316 796
- WO-A1-2006/079500
- WO-A1-2009/101188

## Beschreibung

Die vorliegende Erfindung betrifft eine Getränkebereitungsvorrichtung, insbesondere eine Kaffeemaschine, mit einer Prozessstufe eingerichtet zum Fördern und zum Erhitzen von zugeführtem Wasser und zum Auslassen eines zubereiteten Fluids. Die Erfindung betrifft auch ein Verfahren zum Betreiben einer Getränkebereitungsvorrichtung mit einer derartigen Prozessstufe.

Getränkebereitungsvorrichtungen wie z. B. Kaffeemaschinen, insbesondere Kaffeevollautomaten, sind vielfach dazu ausgelegt, dass unterschiedliche Arten von Produkten mit ihnen zubereitet werden können. Beispielsweise sind Kaffeemaschinen bekannt, welche dazu geeignet sind, Kaffee in einer Kaffee-Brüheinheit zuzubereiten und ausserdem Heisswasser an einem Heisswasserauslass und/oder Dampf an einem Dampfauslass auszugeben.

Die herzustellenden Produkte sollen einerseits geschmacklich einwandfrei und physiologisch verträglich sein; andererseits sollen Beeinträchtigungen, die technischer Natur sind, wie z. B. das Ansammeln von Kalkablagerungen und dergleichen möglichst vermieden werden. Aus geschmacklichen Gründen wird für die Zubereitung oft Wasser mit einer vergleichsweise geringen Carbonathärte bevorzugt ("weiches Wasser"). Dies kann dazu beitragen, auch die genannten Kalkablagerungen zu verringern, da diese zu einem Teil auf das Vorhandensein von Hydrogencarbonat (HCO₃⁻) und anderen sogenannten Härtebildnern in dem Wasser zurückzuführen sind. Zu den Härtebildnern gehören z. B. auch Erdalkalimetallionen wie Mg²⁺ und Ca²⁺, die beispielsweise an Carbonationen gebunden sind und als Magnesiumcarbonat oder als Calciumcarbonat vorliegen.

Neben der Carbonathärte trägt auch die sogenannte Nichtcarbonathärte oder permanente Härte zur Gesamthärte des Wassers bei. Die Ionen, die in die Nichtcarbonathärte des Wassers eingehen, sind nicht an Hydrogencarbonat gebunden.

Oft werden zur Verringerung der Carbonathärte Enthärtungseinrichtungen verwendet, z. B. in Patronenform auf Basis eines Ionen-Austauscherharzes. Trinkwasser, das beispielsweise in einen Wasserbehälter der Getränkebereitungsvorrichtung eingefüllt ist, wird beim Produktbezug der Enthärtungseinrichtung zugeführt, und die Härtebildner-Ionen werden gegen solche getauscht, beispielsweise gegen Na⁺-Ionen, die nicht zum Ausfällen und zu Kalkablagerungen neigen. Die Härte des Wassers wird dadurch verringert.

In Bezug auf bestimmte Ionenarten stark deionisiertes Wasser kann zu physiologischen Beeinträchtigungen führen. Ausserdem ist für bestimmte zu erzeugende Produkte eine zu niedrige Wasserhärte nicht wünschenswert, sondern die Ionenkonzentration sollte in einem Bereich zwischen einer Untergrenze und einer Obergrenze liegen. Die Qualität eines zuzubereitenden Heissgetränks hängt also von der Wasserzusammensetzung ab, unter anderem von einer Konzentration von Härtebildner-Ionen in einem bestimmten Bereich.

Aus dem Stand der Technik sind Getränkebereitungsvorrichtungen mit einer permanent in einem Wasserbehälter vorhandenen Enthärtungseinrichtung bekannt. Die WO 2014/032195 A1 offenbart eine Vorrichtung zum Bereitstellen von Flüssigkeit für einen Getränkeautomaten mit einem Filter, der einen Filtereinsatz in Form eines Ionentauschers aufweist. Zumindest ein Teil des durch den Filter fliessenden Wassers wird deionisiert und auf diese Weise entkalkt.

Die EP 1 498 060 B1 offenbart eine Filterpatrone mit mehreren Filterkammern, die sämtlich durchströmt werden. Die Filterpatrone dient dem Enthärten von Wasser, das aus einem Wasserbehälter entnommen wird und zum Aufbrühen von Kaffeepulver verwendet wird.

Die WO 2006/079500 A1 offenbart ein Verfahren zum Steuern des Wasser-Zuflusses zu einer Kaffeemaschine, die mit einer Ionentauscher-Einrichtung versehen ist. In dem herkömmlichen Verfahren wird die maximale Menge an Wasser bestimmt, welche die Ionentauscher-Einrichtung durchströmen darf, bis diese voraussichtlich erschöpft ist. Wenn die maximale Menge an Wasser erreicht ist, sieht das herkömmliche Verfahren vor, die Ionentauscher-Einrichtung für den Wasser-Zufluss zu der Kaffeemaschine zu umgehen.

Die vorbekannten Lösungen weisen den Nachteil auf, dass durch die in ihrer Konzentration verminderten, aber im Wasser ggf. noch vorhandenen Härtebildner-Ionen eine Verkalkung der Getränkebereitungsvorrichtung weiterhin stattfindet. Es ist eine Aufgabe der Erfindung, die oben genannten Nachteile zu vermeiden, und eine Getränkebereitungsvorrichtung anzugeben, die bezogen auf die Wasserhärte physiologisch verträgliche Produkte ausgibt, und bei der die Neigung zum Ansammeln von Kalkablagerungen verringert ist.

Die Aufgabe wird gelöst durch eine Getränkebereitungsvorrichtung mit einer Prozessstufe gemäss den Merkmalen des Anspruchs 1. Ebenfalls Bestandteil dieser Offenbarung ist ein Verfahren zum Betreiben einer Getränkebereitungsvorrichtung mit einer Prozessstufe gemäss Anspruch 13.

Gemäss einem Aspekt der Erfindung weist eine Getränkebereitungsvorrichtung eine Prozessstufe auf, die eingerichtet ist zum Fördern und zum Erhitzen von zugeführtem Wasser und zum Auslassen eines zubereiteten Fluids, wobei die Prozessstufe einen Erhitzer zum Erhitzen des zugeführten Wassers auf wahlweise eine erste Solltemperatur oder eine davon verschiedene zweite Solltemperatur sowie eine Pfad-Auswahleinrichtung zum selektiven Auswählen eines direkten Pfads für das geförderte Wasser oder eines Enthärtungspfads mit einer Prozessstufen-Enthärtungseinrichtung für das geförderte Wasser aufweist, wobei die Pfad-Auswahleinrichtung dazu ausgebildet ist, den Enthärtungspfad auszuwählen, wenn der Erhitzer das zugeführte Wasser auf die erste Solltemperatur erhitzt, und wobei die Pfad-Auswahleinrichtung dazu ausgebildet ist, den direkten Pfad auszuwählen, wenn der Erhitzer das zugeführte Wasser auf die zweite Solltemperatur erhitzt.

Insbesondere ist entweder der direkte Pfad oder der Enthärtungspfad auswählbar. Das Auswählen kann automatisch erfolgen, beispielsweise in einem Kaffee-Vollautomaten, oder es kann manuell erfolgen. Das Auswählen kann z. B. pro Produktbezug, z. B. pro Brühvorgang eines aufzubrühenden Getränks wie beispielsweise Kaffee, pro Bezugsvorgang von Dampf oder dergleichen erfolgen. Das Auswählen kann auch während eines Produktbezugs umschaltbar erfolgen, d. h. es kann während eines Produktbezugs zwischen dem direkten Pfad und dem Enthärtungspfad umgeschaltet werden.

Das durch die Prozessstufe geleitete Wasser kann also selektiv entweder direkt zum Ausgang der Prozessstufe geführt werden, oder es kann über eine Prozessstufen-Enthärtungseinrichtung zum Ausgang der Prozessstufe geführt werden. Dies erfolgt in Abhängigkeit davon, auf welche der Solltemperaturen das geförderte Wasser innerhalb der Prozessstufe erhitzt wird bzw. erhitzt werden soll.

Die Begriffe "erste Solltemperatur" und "zweite Solltemperatur" implizieren keine Beschränkung auf nur diese beiden Solltemperaturen; vielmehr können auch noch weitere Solltemperaturen vorgesehen sein.

Vorteilhafte Weiterbildungen der erfindungsgemässen Lösung ergeben sich aus den abhängigen Ansprüchen.

Die hierin genannten Enthärtungseinrichtungen können beliebig ausgestaltet sein und beispielsweise - aber ohne Beschränkung - eines oder mehrere der folgenden Enthärtungsmittel aufweisen:
- Kationen-Austauscherharz;
- Anionen-Austauscherharz;
- Kationen-Austauschermembran;
- Anionen-Austauschermembran;
- Schichtsilikat;
- Zeolith.

Die erste und die zweite Solltemperatur der Prozessstufe sind vorgegeben oder vorgebbar. Die Solltemperaturen geben einen Sollwert der Temperatur für das zuzubereitende Fluid an. Die Solltemperaturen können jeweils auch Solltemperatur-Bereiche sein, die beispielsweise eine Breite von 10 K oder von 5 K überstreichen. Die voneinander verschiedenen ersten und zweiten Solltemperaturbereiche überschneiden sich vorzugsweise nicht. Die Solltemperaturen oder Solltemperaturbereiche können jeweils fest vorgegebene Werte bzw. Wertebereiche sein, beispielsweise fest einprogrammierte Werte bzw. Wertebereiche. Sie können auch von einer Bedienperson einstellbare Werte bzw. Wertebereiche sein.

Der Begriff "Solltemperatur" bezeichnet hierbei wie auch im Folgenden eine Temperatur, welche das Fluid erreichen soll, welches aus der Prozessstufe ausgelassen werden soll. Zum Erhitzen des Wassers in der Prozessstufe auf die Solltemperatur dient der Erhitzer der Prozessstufe. Eine entsprechende Solltemperatur kann für einen bestimmten Verwendungszweck, beispielsweise für ein bestimmtes zu beziehendes Produkt, vorgegeben oder vorgebbar sein. Eine solche vorab festgelegte Solltemperatur wird beim Bezug des entsprechenden Produkts eingestellt, und in der Prozessstufe wird angestrebt, die eingestellte Solltemperatur für das zuzubereitende (das auszulassende) Fluid an deren Ausgang zu erreichen. Hierfür kann z. B. eine Regelung vorgesehen sein, beispielsweise ein einfacher Regelkreis, der den Erhitzer ansteuert. Im Normalbetrieb entspricht die Isttemperatur des ausgelassenen Fluids im Wesentlichen der eingestellten Solltemperatur oder wird zumindest annähernd erreicht.

Der Erhitzer der Prozessstufe ist vorzugsweise der Pfad-Auswahleinrichtung nachgelagert. Der Erhitzer ist beispielsweise als Durchlauferhitzer ausgebildet. "Nachgelagert" ist in diesem Zusammenhang auf die Strömungsrichtung des geförderten Wassers bezogen, d. h. das geförderte Wasser strömt zunächst durch die Pfad-Auswahleinrichtung, dann - je nach ausgewähltem Pfad - entweder durch den direkten Pfad oder durch den Enthärtungspfad mit der Prozessstufen-Enthärtungseinrichtung, und erst danach durch den Erhitzer.

Wie bereits ausgeführt, steigt die Neigung zur Ablagerung von Kalk und ähnlichen Härtebildnern mit steigender Fluidtemperatur. Bei einer nachgelagerten Anordnung des Erhitzers hinter der Pfad-Auswahleinrichtung kann sichergestellt werden, dass beispielsweise bei einem gewünschten Anstieg der Fluidtemperatur diejenigen Teile des Fluidsystems, die mit dem Fluid auf der hohen Temperatur in Berührung kommen, nur Kontakt mit solchem Fluid haben, das bereits die Prozessstufen-Enthärtungseinrichtung durchlaufen hat. Dies kann dazu beitragen, die Kalkablagerungen noch effektiver zu verringern.

Gemäss einem weiteren Aspekt ist vorgesehen, dass die erste Solltemperatur höher ist als die zweite Solltemperatur. Mit anderen Worten ist es gemäß diesem Aspekt also vorgesehen, dass die Prozessstufe dazu ausgebildet ist, den Enthärtungspfad auszuwählen, wenn eine erste Solltemperatur eingestellt ist, die höher als eine zweite Solltemperatur ist. Die Selektion des entsprechenden Pfads erfolgt also anhand der Höhe der eingestellten Solltemperatur für das zuzubereitende Fluid. Die Intensität unerwünschter Ablagerungen, beispielsweise Kalkablagerungen, ist mittelbar oder unmittelbar mit der Temperatur des zubereiteten Fluids verknüpft, und sie steigt tendenziell bei steigender Temperatur.

Es ist gemäss dem Aspekt also vorgesehen, dass der Enthärtungspfad ausgewählt wird, wenn zu erwarten ist, dass sich die Intensität von Kalkablagerungen infolge der höheren Temperatur des zubereiteten Fluids erhöhen wird. Dies ist beispielsweise anzunehmen, wenn die Temperatur des zubereiteten Fluids höher ist als die Siedetemperatur des Wassers. Dieser Aspekt umfasst insbesondere auch die Erwägung, dass die erste Solltemperatur grösser ist als die Siedetemperatur des Wassers, und dass die zweite Solltemperatur kleiner ist als die Siedetemperatur des Wassers.

Eine Enthärtung in der Prozessstufen-Enthärtungseinrichtung, die selektiv bei einer höheren Temperatur unter verschiedenen Solltemperaturen erfolgt, kann dazu beitragen, dass die Kalkablagerungen effektiv verringert werden und eine Abnutzung der Prozessstufen-Enthärtungseinrichtung verringert wird.

Gemäss einem weiteren Aspekt ist vorgesehen, dass bei der ersten Solltemperatur das zubereitete Fluid am Ausgang der Prozessstufe gasförmig ist, und dass bei der zweiten Solltemperatur das zubereitete Fluid am Ausgang der Prozessstufe flüssig ist. Obwohl der Aggregatzustand auch vom Druck des Fluids abhängig ist, werden im vorliegenden technischen Gebiet keine besonders hohen Drücke verwendet; daher spielt der Druck bei dieser Betrachtung nur eine untergeordnete Rolle, und der Aggregatzustand ist tatsächlich im Wesentlichen von der Temperatur (Solltemperatur) abhängig.

Beispielsweise ist an der Getränkebereitungsvorrichtung ein Getränkeauslass vorgesehen, aus welchem - ggf. nach einer vorgelagerten Brühstufe - ein Heissgetränk ausgegeben wird. Ausserdem ist beispielsweise ein Dampfauslass vorgesehen, aus welchem bei Bedarf Wasserdampf ausgegeben wird, z. B. zum Zubereiten von geschäumter Milch. Gemäss diesem Aspekt ist also vorgesehen, dass der Enthärtungspfad gezielt dann ausgewählt wird, wenn Dampf ausgegeben werden soll (das zubereitete Fluid am Ausgang der Prozessstufe ist gasförmig). Eine Enthärtung in der Prozessstufen-Enthärtungseinrichtung, die selektiv bei der Zubereitung von Wasserdampf erfolgt, kann dazu beitragen, dass die Kalkablagerungen effektiv verringert werden und eine Abnutzung der Prozessstufen-Enthärtungseinrichtung verringert wird.

Gemäss einem weiteren Aspekt ist vorgesehen, dass die Getränkebereitungsvorrichtung eine der Prozessstufe vorgelagerte Enthärtungseinrichtung für das der Prozessstufe zuzuführende Wasser aufweist.

Eine solche vorgelagerte Enthärtungseinrichtung kann z. B. eine gewisse Grundenthärtung des Wassers vornehmen, wie sie später noch beschrieben wird. Die vorgelagerte Enthärtungseinrichtung bewirkt auch dann eine Verringerung der Wasserhärte, wenn in der Prozessstufe der direkte Pfad ausgewählt ist. Wenn jedoch der Enthärtungspfad in der Prozessstufe ausgewählt ist, wirken die vorgelagerte Enthärtungseinrichtung und die Prozessstufen-Enthärtungseinrichtung zusammen.

Es kann gemäss einem weiteren Aspekt in diesem Zusammenhang vorgesehen sein, dass die vorgelagerte Enthärtungseinrichtung dazu ausgebildet ist, die Carbonathärte des der Prozessstufe zuzuführenden Wassers und/oder die Nichtcarbonathärte des der Prozessstufe zuzuführenden Wassers auf mehr als 0 mmol/l (Millimol pro Liter) zu verringern. Vorzugsweise ist gemäss diesem Aspekt die vorgelagerte Enthärtungseinrichtung dazu ausgebildet, die Carbonathärte des der Prozessstufe zuzuführenden Wassers und/oder die Nichtcarbonathärte des der Prozessstufe zuzuführenden Wassers auf minimal 0,7 mmol/l, besonders vorzugsweise auf minimal 1,0 mmol/l zu verringern. Die Konzentrationen beziehen sich auf die Gesamtmenge der Härtebildner-Ionen Ca²⁺ und Mg²⁺.

Die vorgelagerte Enthärtungseinrichtung führt gemäss diesem Aspekt eine Teilenthärtung des Wassers durch, welches der Prozessstufe zugeführt werden soll bzw. zugeführt wird. Unter dem Begriff "Teilenthärtung" wird hier verstanden, dass eine oder mehrere Ionentypen, die als Härtebildner fungieren, um einen Teilbetrag in dem zuzuführenden Wasser verringert werden, z. B. durch Ionentausch.

Eine solche Teilenthärtung kann z. B. dadurch vorgenommen werden, dass die vorgelagerte Enthärtungseinrichtung einen Teil des Wassers, das der Prozessstufe zugeführt wird, durch einen enthärtungsaktiven Bereich führt und einen (in der Regel kleineren) Teil des Wassers nicht durch den enthärtungsaktiven Bereich führt, sondern an diesem vorbeileitet. Andere Lösungen für eine Teilenthärtung sind aber ebenso denkbar.

Gemäss diesem Aspekt kann bewirkt werden, dass stets grundenthärtetes Wasser am Eingang der Prozessstufe zur Verfügung steht, das beispielsweise bei einer normalen Getränkezubereitung verwendet werden kann. Wasser mit einer Carbonhärte oder einer Nichtcarbonhärte von mehr als 0 mmol/l ist in der Regel physiologisch gut geeignet zur Zubereitung von Getränken, insbesondere von Heissgetränken wie z. B. Tee. Dadurch, dass bereits eine Teilenthärtung stattgefunden hat, ist das produzierte Getränk auch geschmacklich vorteilhaft. Ablagerungen von Kalk und Ähnlichem werden auch bei dem teilenthärteten Wasser verringert, insbesondere bei einer entsprechenden Fluidtemperatur unterhalb des Dampfbereichs.

Alternativ oder zusätzlich kann gemäss einem weiteren Aspekt vorgesehen sein, dass die Prozessstufen-Enthärtungseinrichtung dazu ausgebildet ist, die Carbonathärte des aus der Prozessstufe auszulassenden Fluids und/oder die Nichtcarbonathärte des aus der Prozessstufe auszulassenden Fluids auf weniger als 0,7 mmol/l (Millimol pro Liter) zu verringern. Vorzugsweise ist vorgesehen, dass die Prozessstufen-Enthärtungseinrichtung dazu ausgebildet ist, die Carbonathärte des aus der Prozessstufe auszulassenden Fluids und/oder die Nichtcarbonathärte des aus der Prozessstufe auszulassenden Fluids auf im Wesentlichen 0 mmol/l zu verringern. Die Konzentrationen beziehen sich auf die Gesamtmenge der Härtebildner-Ionen Ca²⁺ und Mg²⁺.

Gemäss der in der Schweiz üblichen Härtestufenskala ist Wasser mit einem Anteil von Ca²⁺-Ionen und Mg²⁺-Ionen in einem Bereich unterhalb von 0,7 mmol/l als "sehr weiches" Wasser festgelegt. Solch sehr weiches Wasser ist ggf. nicht gut für die Zubereitung von bestimmten Heissgetränken wie z. B. Kaffee oder Tee geeignet. Dies kann an geschmacklichen Gründen liegen, da vermutet wird, dass ein gewisser Konzentrationsbereich der genannten Ionen oberhalb von den genannten Konzentrationen und unterhalb einer (hier nicht näher definierten) Maximalkonzentration optimal ist, also ein gewisses Minimum an den genannten Ionen im Brühwasser vorliegen sollte. Andererseits kann es aber aus physiologischen Gründen auch geraten sein, ein gewisses Minimum an den genannten Ionen vorzusehen.

Solch sehr weiches Wasser ist jedoch hervorragend für andere Anwendungen geeignet, beispielsweise für Wasserdampf, der zum Herstellen von aufgeschäumter Milch oder Ähnlichem dient. Gerade auf den hohen Temperaturen, die für einen Dampfbezug notwendig sind, ist der Einsatz von solch sehr weichem Wasser zudem vorteilhaft, da dadurch Kalkablagerungen wirksam verringert werden können.

Gemäss diesem Aspekt, der besonders vorteilhaft mit dem Aspekt kombinierbar ist, gemäss welchem die vorgelagerte Enthärtungseinrichtung eine gewisse Grundenthärtung oberhalb von 0 mmol/l an Härtebildner-Ionen vornimmt, wird also vorteilhaft eine im Wesentlichen vollständige Enthärtung des auszugebenden Fluids vorgenommen, wenn die geschmacklichen und physiologischen Voraussetzungen für eine solche im Wesentlichen vollständige Enthärtung vorliegen, wodurch Kalkablagerungen wirksam verringert werden können.

Gemäss einem weiteren Aspekt ist vorgesehen, dass die vorgelagerte Enthärtungseinrichtung in oder an einem Wasserbehälter der Getränkebereitungsvorrichtung angeordnet ist. Alternativ oder zusätzlich kann es vorgesehen sein, dass ein enthärtungsaktiver Teil der vorgelagerten Enthärtungseinrichtung auswechselbar und/oder regenerierbar ausgebildet ist. Ein solcher enthärtungsaktiver Teil kann sich tatsächlich nur auf einen physischen Teilbereich der vorgelagerten Enthärtungseinrichtung beziehen, welcher dann auswechselbar und/oder regenerierbar ist. Es ist aber auch möglich, dass die gesamte vorgelagerte Enthärtungseinrichtung den enthärtungsaktiven Teil bildet und auswechselbar und/oder regenerierbar ist.

Ein Beispiel für eine auswechselbare Enthärtungseinrichtung ist eine solche auf Kartuschen- bzw. Patronenbasis mit einer bestimmten Enthärtungsleistung, wobei die Kartusche bzw. Patrone nach einer gewissen dort hindurchgeleiteten Wassermenge und/oder nach einer gewissen abgelaufenen Zeit ausgetauscht wird. In einer Enthärterkartusche/Enthärterpatrone können auch zusätzliche Filter eingelassen sein, beispielsweise Aktivkohlefilter o. Ä. Eine regenerierbare Enthärtungseinrichtung kann z. B. eine chemische Regeneration vorsehen, z. B. durch eine Kochsalzbehandlung, mit welcher an ein Ionentauschermedium angelagerte Härtebildner-Ionen durch Na⁺-Ionen verdrängt werden.

Gemäss einem weiteren Aspekt ist vorgesehen, dass die Prozessstufen-Enthärtungseinrichtung für die Lebensdauer der Getränkebereitungsvorrichtung wartungsfrei in der Prozessstufe integriert ausgebildet ist. Ein solcher Festeinbau ist anwenderfreundlich, da eine Bedienperson nicht mit einem womöglich komplizierten Wechselvorgang betraut werden muss. Eine integrierte Prozessstufen-Enthärtungseinrichtung kann an einer technisch vorteilhaften Stelle in der Getränkebereitungsvorrichtung angeordnet sein. Die zu erwartende Lebensdauer der Getränkebereitungsvorrichtung wird beim Gerätedesign festgelegt; daran orientiert sich die vorzusehende Entkalkungskapazität für die Prozessstufen-Enthärtungseinrichtung.

Alternativ kann es gemäss einem weiteren Aspekt aber auch vorgesehen sein, dass ein enthärtungsaktiver Teil der Prozessstufen-Enthärtungseinrichtung auswechselbar und/oder regenerierbar ausgebildet ist. Ein solcher enthärtungsaktiver Teil kann sich tatsächlich nur auf einen physischen Teilbereich der Prozessstufen-Enthärtungseinrichtung beziehen, welcher dann auswechselbar und/oder regenerierbar ist. Es ist aber auch möglich, dass die gesamte Prozessstufen-Enthärtungseinrichtung den enthärtungsaktiven Teil bildet und auswechselbar und/oder regenerierbar ist.

Gemäss einem weiteren Aspekt ist es vorgesehen, dass die Getränkebereitungsvorrichtung eine Produktauswahl eines zuzubereitenden Produkts oder einer zuzubereitenden Produktabfolge aus einer Mehrzahl von Produkten mit jeweils einer unterschiedlichen Getränketemperatur des auszulassenden Fluids durch eine Bedienperson erlaubt. Die Getränkebereitungsvorrichtung ist gemäss diesem Aspekt dazu ausgebildet, der Prozessstufe entweder die erste Solltemperatur oder die zweite Solltemperatur in Abhängigkeit der Getränketemperatur vorzugeben. Die Vorgabe der ersten Solltemperatur oder der zweiten Solltemperatur an die Prozessstufe kann auch während des Bezugs eines zuzubereitenden Produkts oder während des Bezugs einer zuzubereitenden Produktabfolge verändert werden; mit anderen Worten: Es ist auch ein Umschalten zwischen dem direkten Pfad oder dem Enthärtungspfad während des Bezugs eines zuzubereitenden Produkts oder während des Bezugs einer zuzubereitenden Produktabfolge möglich.

Die Produktauswahl erfolgt vorzugsweise vollautomatisch oder halbautomatisch, beispielsweise in einem Kaffee-Vollautomaten. Auswählbare Produkte können z. B. Kaffee, Espresso, Cappuccino, Caffe latte, Milchschaum, Dampf sein. Beispielsweise kann vorgesehen sein, dass bei der Auswahl eines Kaffee-Produkts oder eines Kaffee-Grundprodukts (z. B. Espresso für einen Cappuccino) das Fluid in der Prozessstufe auf einer vergleichsweise niedrigen Brühtemperatur (z. B. ungefähr 85 °C oder ungefähr 90 °C bzw. auf einer Temperatur, welche geringer als die Siedetemperatur des Wasser ist) zubereitet wird. Bei einem vorhergehenden oder anschliessenden Bezug von Dampf (zum manuellen Herstellen von Milchschaum) oder Milchschaum (automatisch erzeugt), z. B. im Zusammenhang mit einer gewählten Produktabfolge, wird das Fluid in der Prozessstufe auf einer höheren Temperatur (z. B. > 100 °C oder auf einer Temperatur, welche grösser als die Siedetemperatur des Wasser ist) zubereitet. Bei der niedrigeren Brühtemperatur kann dann z. B. der direkte Pfad ausgewählt werden, und bei der höheren Temperatur zur Dampferzeugung kann der Enthärtungspfad ausgewählt werden.

Gemäss einem weiteren Aspekt weist die Getränkebereitungsvorrichtung ferner eine Signalisierungseinrichtung auf, die dazu ausgebildet ist, festzustellen, ob ein Kriterium zum Auswechseln und/oder Regenerieren der vorgelagerten Enthärtungseinrichtung erfüllt ist. Wenn festgestellt wird, dass das Kriterium erfüllt ist, wird ein entsprechendes Signal ausgegeben, z. B. an eine Bedienperson.

Alternativ oder zusätzlich kann es vorgesehen sein, dass die Signalisierungseinrichtung dazu ausgebildet ist, festzustellen, ob ein Kriterium zum Auswechseln und/oder Regenerieren der Prozessstufen-Enthärtungseinrichtung erfüllt ist. Wenn festgestellt wird, dass das Kriterium erfüllt ist, wird ein entsprechendes Signal ausgegeben, z. B. an eine Bedienperson. Gemäss einem weiteren Aspekt ist die Getränkebereitungsvorrichtung eine Kaffeemaschine, insbesondere ein Kaffee-Vollautomat.

Die Erfindung betrifft weiterhin ein Verfahren zum Betreiben einer Getränkebereitungsvorrichtung, welche eine Prozessstufe umfasst, die zum Fördern und zum Erhitzen von zugeführtem Wasser und zum Auslassen eines zubereiteten Fluids eingerichtet ist und eine Pfad-Auswahleinrichtung zum selektiven Auswählen eines direkten Pfads für das geförderte Wasser oder eines Enthärtungspfads mit einer Prozessstufen-Enthärtungseinrichtung für das geförderte Wasser aufweist, wobei der Pfad-Auswahleinrichtung ein Erhitzer zum Erhitzen des zugeführten Wasser nachgelagert ist. Gemäss diesem Verfahren wird die Getränkebereitungsvorrichtung derart betrieben, dass alternativ entweder die folgenden Schritte (A) oder die folgenden Schritte (B) durchgeführt werden:
(A) Auswählen des Enthärtungspfads mittels der Pfad-Auswahleinrichtung und Fördern von zugeführtem Wasser über den Enthärtungspfad zum Erhitzer, wobei das über den Enthärtungspfad geförderte Wasser mittels der Prozessstufen-Enthärtungseinrichtung enthärtet wird und anschliessend mittels des Erhitzers auf eine erste Solltemperatur erhitzt wird; oder
(B) Auswählen des direkten Pfads mittels der Pfad-Auswahleinrichtung und Fördern von zugeführtem Wasser über den direkten Pfad zum Erhitzer, wobei das über den direkten Pfad geförderte Wasser mittels des Erhitzers auf eine zweite Solltemperatur erhitzt wird, wobei die zweite Solltemperatur verschieden von der ersten Solltemperatur ist.

Gemäss diesem Verfahren wird der direkte Pfad oder der Enthärtungspfad für das zugeführte Wasser ausgewählt, abhängig von der jeweiligen Solltemperatur, auf welche das Wasser mittels des Erhitzers erhitzt werden soll. Die erste und die zweite Solltemperatur sind jeweils vorgegeben oder vorgebbar.

Gemäss einem weiteren Aspekt des erfindungsgemäßen Verfahrens ist die erste Solltemperatur höher als die zweite Solltemperatur. Insbesondere ist gemäß diesem Aspekt die erste Solltemperatur höher als die Siedetemperatur des Wassers, und die zweite Solltemperatur ist niedriger als die Siedetemperatur des Wassers.

Wenn die zweite Solltemperatur kleiner als die Siedetemperatur des Wassers ist,würde das Wasser gemäss den Schritten (B) mittels des Erhitzers auf eine Temperatur aufgeheizt, bei welcher sich das Wasser in einem flüssigen Zustand befindet. Wenn die erste Solltemperatur größer als die Siedetemperatur des Wassers ist, würde das Wasser gemäss den Schritten (A) mittels des Erhitzers auf eine Temperatur aufgeheizt, bei welcher das Wasser verdampft.

Dabei ist gewährleistet, dass das zugeführte Wasser über den Enthärtungspfad der Prozessstufe gefördert und dabei enthärtet wird, sofern das Wasser auf eine relativ hohe (erste) Solltemperatur (im Vergleich zu einer anderen "zweiten" Solltemperatur) erhitzt werden soll, während das zugeführte Wasser über den direkten Pfad der Prozessstufe gefördert wird (ohne auf dem direkten Pfad der Prozessstufe enthärtet zu werden), sofern das Wasser auf eine relativ niedrige (zweite) Solltemperatur erhitzt werden soll.

Weitere Einzelheiten der Erfindung und insbesondere eine beispielhafte Ausführungsform der erfindungsgemässen Vorrichtung werden im Folgenden anhand der beigefügten Zeichnungen erläutert.

Es zeigt:

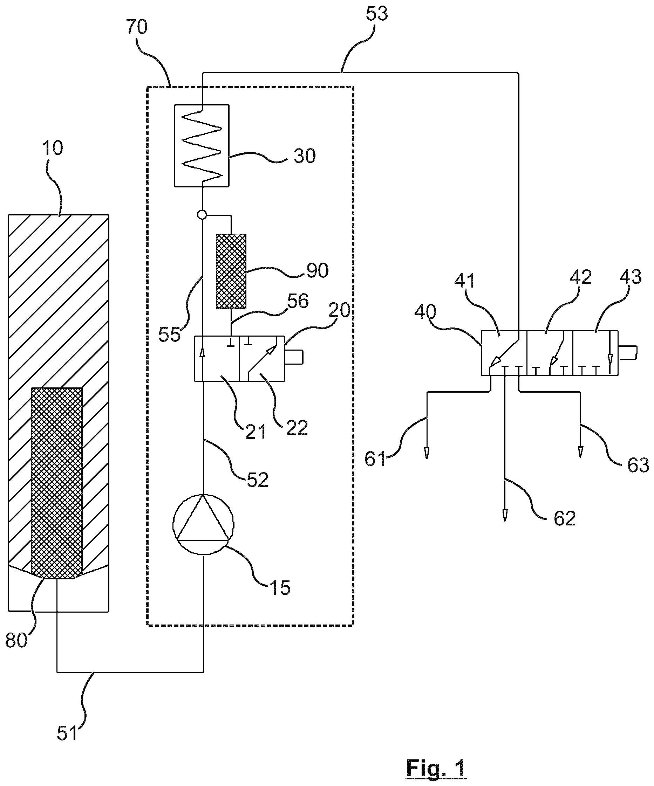

- Fig. 1: eine schematische Ansicht einer Getränkebereitungsvorrichtung gemäss einer Ausführungsform der Erfindung.

In der Fig. 1 ist eine schematische Ansicht einer Getränkebereitungsvorrichtung gemäss einer Ausführungsform der Erfindung dargestellt.

Ein Wasserbehälter 10 ist an dessen Auslass mit einer Pumpenzuleitung 51 verbunden, welche in eine Prozessstufe 70 mündet, die mittels einer gestrichelten Linie angedeutet ist. Der Wasserbehälter 10 ist mit in der Regel kaltem Trinkwasser befüllbar. In der Prozessstufe ist eine Zuführpumpe 15 vorgesehen, welche das am Eingang der Prozessstufe 70 anstehende Wasser in eine Ventilzuleitung 52 fördert. Diese Ventilzuleitung 52 mündet ihrerseits in eine Pfad-Auswahleinrichtung, die bei der dargestellten Ausführungsform konkret als Umschaltventil 20 (als Wegeventil mit einem Eingang, zwei Ventilstufen 21, 22 und jeweils einem Ausgang pro Ventilstufe 21, 22) ausgebildet ist. Das Umschaltventil 20 ist ansteuerbar ausgebildet, beispielsweise elektromagnetisch, pneumatisch/hydraulisch oder mechanisch.

In einer ersten Ventilstufe 21 des Umschaltventils 20 ist am Ventilausgang ein direkter Pfad 55 angeschlossen, über welchen ein dem Umschaltventil 20 nachgelagerter Erhitzer 30 direkt mit der Ventilzuleitung 52 verbunden ist.

In einer zweiten Ventilstufe 22 des Umschaltventils ist am Ventilausgang ein Enthärtungspfad 56 angeschlossen. In diesem Enthärtungspfad 56 ist eine Prozessstufen-Enthärtungseinrichtung 90 strömungsmässig zwischen den Eingang des Erhitzers 30 und die Ventilzuleitung 52 geschaltet.

Ein Erhitzer 30 ist in der Ausführungsform ein ansteuerbarer elektrischer Durchlauferhitzer, der zur Bereitung eines ausgabeseitigen Fluids auf mindestens zwei verschiedenen Solltemperaturen ausgebildet ist. Unter den Solltemperaturen ist gemäss der beschriebenen Ausführungsform wenigstens eine, bei welcher das ausgabeseitige Fluid gasförmig ist.

Der Erhitzer 30 ist ausgangsseitig an eine Auslasszuleitung 53 angeschlossen, um das zubereitete Fluid einer Auslasseinrichtung zuzuführen. Die Auslasseinrichtung weist gemäss dem Ausführungsbeispiel einen ersten Auslass 61, einen zweiten Auslass 62 und einen dritten Auslass 63 auf. Beispielsweise mündet der erste Auslass 61 in eine Brüheinheit zum Zubereiten eines Kaffeegetränks, der zweite Auslass 62 in eine Heisswasser-Ausgabeeinrichtung für einen Heisswasserbezug, z. B. für Tee, und der dritte Auslass 63 in eine Dampfdüse zum Aufschäumen von Milch. Ein Auslassventil 40, das wiederum als ansteuerbares Wegeventil ausgebildet ist, beispielsweise elektromagnetisch, pneumatisch/hydraulisch oder mechanisch ansteuerbar, lässt eine Auswahl des jeweiligen Auslasses 61, 62 bzw. 63 zu, und zwar mittels einer jeweiligen ersten Ventilstufe 41, zweiten Ventilstufe 42 bzw. dritten Ventilstufe 43 des Auslassventils 40.

Im Wasserbehälter 10 ist bei dem dargestellten Ausführungsbeispiel eine vorgelagerte Enthärtungseinrichtung 80 angeordnet. Die vorgelagerte Enthärtungseinrichtung 80 ist in dem Ausführungsbeispiel eine Filterkartusche, welche eine Teilenthärtung (eine Grundenthärtung) des Wassers aus dem Wasserbehälter 10 durchführt. Dieses teilenthärtete Wasser weist eine Härte auf, welche zum Zubereiten von Heissgetränken mit geschmacklich hoher Güte geeignet ist.

Die Getränkebereitungsvorrichtung nach der dargestellten Ausführungsform ist dazu ausgebildet, die Prozessstufe 70 anzuweisen, die erste Ventilstufe 21 des Umschaltventils 20 zu wählen, wenn ein Heissgetränkebezug erfolgen soll, und die zweite Ventilstufe 22 des Umschaltventils 20 zu wählen, wenn ein Dampfbezug über den dritten Auslass 63 erfolgen soll.

Bei einem Heissgetränkebezug wird das Wasser, das in die Prozessstufe 70 einläuft, mittels der Zuführpumpe 15 dem Umschaltventil 20 auf der ersten Ventilstufe 21 zugeführt. Demgemäss wird das Wasser über den direkten Pfad 55 dem Erhitzer 30 zugeleitet und dort auf eine Temperatur erhitzt, welche zum Bereiten des Heissgetränks geeignet ist, z. B. auf eine Temperatur im Bereich zwischen 80 °C und 95 °C, vorzugsweise ca. 85 °C, bzw. auf eine Temperatur unterhalb der Siedetemperatur des Wassers. Anschliessend läuft das Wasser mittels des Pumpendrucks weiter über die Auslasszuleitung zum Auslassventil 40, welches sich in der dargestellten Ausführungsform beim Bezug von Kaffee auf der ersten Ventilstufe 41 befindet oder beim Bezug von Heisswasser auf der zweiten Ventilstufe 42 befindet.

Bei einem Dampfbezug, der automatisch oder manuell eingeleitet werden kann, wird das Wasser, das in die Prozessstufe 70 einläuft, wiederum mittels der Zuführpumpe 15 dem Umschaltventil 20 zugeführt, das nun jedoch auf die zweite Ventilstufe 22 eingestellt wurde. Das Wasser wird demgemäss über den Enthärtungspfad 56 geleitet, in welchem die Prozessstufen-Enthärtungseinrichtung 90 angeordnet ist. Dort wird es im Wesentlichen vollständig enthärtet, d. h. die Konzentration an Härtebildner-Ionen, insbesondere Ca²⁺-Ionen und Mg²⁺-Ionen, liegt unterhalb von 0,7 mmol/l und vorzugsweise im Wesentlichen bei 0 mmol/l. Anschliessend wird das Wasser dem Erhitzer 30 zugeleitet und dort auf eine Temperatur erhitzt, welche zum Bereitstellen von Wasserdampf geeignet ist, z. B. auf eine Temperatur oberhalb von 100 °C bzw. oberhalb der Siedetemperatur des Wassers. Anschliessend läuft das Wasser mittels des Pumpendrucks weiter über die Auslasszuleitung zum Auslassventil 40, welches sich in der dargestellten Ausführungsform beim Bezug von Dampf auf der dritten Ventilstufe 43 befindet.

Durch die im Wesentlichen vollständige Enthärtung beim Dampfbezug können Ablagerungen, insbesondere Kalkablagerungen, im Erhitzer 30 sowie in den in Strömungsrichtung des auszugebenden Fluids nachgeordneten Anlagenteilen (Auslasszuleitung 53, Auslassventil 40, Auslässe 61, 62, 63) wirksam verringert werden. Besonders bei den vergleichsweise hohen Temperaturen, die bei der Bereitung von Dampf erforderlich sind, würden die Ablagerungen zunehmen, wenn lediglich eine Grundentkalkung mittels der vorgelagerten Enthärtungseinrichtung 80 erfolgen würde. Gleichzeitig ist durch die selektive Zuschaltbarkeit mittels des Umschaltventils gewährleistet, dass für die Zubereitung von Heissgetränken (also beim Heisswasserbezug) Wasser mit einer Wasserhärte die Prozessstufe verlässt, welche physiologisch und geschmacklich für diesen Zweck geeignet ist.

## Patentansprüche

1. Getränkebereitungsvorrichtung, insbesondere Kaffeemaschine, mit einer Prozessstufe (70) eingerichtet zum Fördern und zum Erhitzen von zugeführtem Wasser und zum Auslassen eines zubereiteten Fluids,
wobei die Prozessstufe (70) einen Erhitzer (30) zum Erhitzen des zugeführten Wassers sowie eine Pfad-Auswahleinrichtung (20) zum selektiven Auswählen eines direkten Pfads (55) für das geförderte Wasser oder eines Enthärtungspfads (56) mit einer Prozessstufen-Enthärtungseinrichtung (90) für das geförderte Wasser aufweist,
**dadurch gekennzeichnet,**
**dass** der Erhitzer zum Erhitzen des zugeführten Wassers auf wahlweise eine erste Solltemperatur oder eine davon verschiedene zweite Solltemperatur ausgebildet ist, dass die Pfad-Auswahleinrichtung (20) dazu ausgebildet ist, den Enthärtungspfad (56) auszuwählen, wenn der Erhitzer (30) das zugeführte Wasser auf die erste Solltemperatur erhitzt, und
**dass** die Pfad-Auswahleinrichtung (20) dazu ausgebildet ist, den direkten Pfad (55) auszuwählen, wenn der Erhitzer (30) das zugeführte Wasser auf die zweite Solltemperatur erhitzt.

2. Getränkebereitungsvorrichtung nach Anspruch 1,
wobei die erste Solltemperatur höher als die zweite Solltemperatur ist, insbesondere wobei die erste Solltemperatur grösser als die Siedetemperatur des Wassers ist und die zweite Solltemperatur kleiner als die Siedetemperatur des Wassers ist.

3. Getränkebereitungsvorrichtung nach Anspruch 2,
wobei bei der ersten Solltemperatur das zubereitete Fluid am Ausgang der Prozessstufe gasförmig ist, und wobei bei der zweiten Solltemperatur das zubereitete Fluid am Ausgang der Prozessstufe flüssig ist.

4. Getränkebereitungsvorrichtung nach einem der vorhergehenden Ansprüche,
die ferner eine der Prozessstufe (70) vorgelagerte Enthärtungseinrichtung (80) für das der Prozessstufe (70) zuzuführende Wasser aufweist.

5. Getränkebereitungsvorrichtung nach Anspruch 4,
wobei die vorgelagerte Enthärtungseinrichtung (80) dazu ausgebildet ist, die Carbonathärte des der Prozessstufe (70) zuzuführenden Wassers und/oder die Nichtcarbonathärte des der Prozessstufe (70) zuzuführenden Wassers auf mehr als 0 mmol/l zu verringern, vorzugsweise auf minimal 0,7 mmol/l zu verringern, besonders vorzugsweise auf minimal 1,0 mmol/l zu verringern.

6. Getränkebereitungsvorrichtung nach einem der vorhergehenden Ansprüche,
wobei die Prozessstufen-Enthärtungseinrichtung (90) dazu ausgebildet ist, die Carbonathärte des aus der Prozessstufe (70) auszulassenden Fluids und/oder die Nichtcarbonathärte des aus der Prozessstufe (70) auszulassenden Fluids auf weniger als 0,7 mmol/l zu verringern, vorzugsweise auf im Wesentlichen 0 mmol/l zu verringern.

7. Getränkebereitungsvorrichtung nach Anspruch 4 oder 5,
wobei die vorgelagerte Enthärtungseinrichtung (80) in oder an einem Wasserbehälter (10) der Getränkebereitungsvorrichtung angeordnet ist, und/oder wobei ein enthärtungsaktiver Teil der vorgelagerten Enthärtungseinrichtung (80) auswechselbar und/oder regenerierbar ausgebildet ist.

8. Getränkebereitungsvorrichtung nach einem der vorhergehenden Ansprüche,
wobei die Prozessstufen-Enthärtungseinrichtung (90) für die Lebensdauer der Getränkebereitungsvorrichtung wartungsfrei in der Prozessstufe (70) integriert ausgebildet ist.

9. Getränkebereitungsvorrichtung nach einem der Ansprüche 1 bis 7,
wobei ein enthärtungsaktiver Teil der Prozessstufen-Enthärtungseinrichtung (90) auswechselbar und/oder regenerierbar ausgebildet ist.

10. Getränkebereitungsvorrichtung nach einem der vorhergehenden Ansprüche
wobei die Getränkebereitungsvorrichtung eine Produktauswahl eines zuzubereitenden Produkts oder einer zuzubereitenden Produktabfolge aus einer Mehrzahl von Produkten mit jeweils einer unterschiedlichen Getränketemperatur des auszulassenden Fluids durch eine Bedienperson erlaubt,
wobei die Getränkebereitungsvorrichtung dazu ausgebildet ist, der Prozessstufe (70) entweder die erste Solltemperatur oder die zweite Solltemperatur in Abhängigkeit der Getränketemperatur vorzugeben.

11. Getränkebereitungsvorrichtung nach einem der vorhergehenden Ansprüche
die ferner eine Signalisierungseinrichtung aufweist, die dazu ausgebildet ist, festzustellen, ob ein Kriterium zum Auswechseln und/oder Regenerieren der vorgelagerten Enthärtungseinrichtung (80) und/oder der Prozessstufen-Enthärtungseinrichtung (90) erfüllt ist, und wenn festgestellt wird, dass das Kriterium erfüllt ist, ein entsprechendes Signal, insbesondere an eine Bedienperson, auszugeben.

12. Getränkebereitungsvorrichtung nach einem der vorhergehenden Ansprüche,
wobei die Getränkebereitungsvorrichtung eine Kaffeemaschine, insbesondere ein Kaffee-Vollautomat ist.

13. Verfahren zum Betreiben einer Getränkebereitungsvorrichtung,
welche Getränkebereitungsvorrichtung eine Prozessstufe (70) umfasst, die zum Fördern und zum Erhitzen von zugeführtem Wasser und zum Auslassen eines zubereiteten Fluids eingerichtet ist und eine Pfad-Auswahleinrichtung (20) zum selektiven Auswählen eines direkten Pfads (55) für das geförderte Wasser oder eines Enthärtungspfads (56) mit einer Prozessstufen-Enthärtungseinrichtung (90) für das geförderte Wasser aufweist, wobei der Pfad-Auswahleinrichtung (20) ein Erhitzer (30) zum Erhitzen des zugeführten Wasser nachgelagert ist,
**dadurch gekennzeichnet,**
**dass** alternativ entweder die folgenden Schritte (A) oder die folgenden Schritte (B) durchgeführt werden:
(A) Auswählen des Enthärtungspfads (56) mittels der Pfad-Auswahleinrichtung (20) und Fördern von zugeführtem Wasser über den Enthärtungspfad (56) zum Erhitzer (30), wobei das über den Enthärtungspfad (56) geförderte Wasser mittels der Prozessstufen-Enthärtungseinrichtung (90) enthärtet wird und anschliessend mittels des Erhitzers (30) auf eine erste Solltemperatur erhitzt wird; oder
(B) Auswählen des direkten Pfads mittels der Pfad-Auswahleinrichtung (20) und Fördern von zugeführtem Wasser über den direkten Pfad zum Erhitzer (30), wobei das über den direkten Pfad geförderte Wasser mittels des Erhitzers (30) auf eine zweite Solltemperatur erhitzt wird, wobei die zweite Solltemperatur verschieden von der ersten Solltemperatur ist.

14. Verfahren nach Anspruch 13, wobei
die erste Solltemperatur höher als die zweite Solltemperatur ist, insbesondere wobei die erste Solltemperatur höher als die Siedetemperatur des Wassers und die zweite Solltemperatur niedriger als die Siedetemperatur des Wassers ist.

## Claims

1. A beverage preparation apparatus, in particular coffee machine, comprising a process stage (70) designed to convey and to heat supplied water and to dispense a prepared fluid,
wherein the process stage (70) has a heater (30) for heating the supplied water and also a path selection device (20) for selectively choosing a direct path (55) for the conveyed water or a softening path (56) comprising a process stage softening device (90) for the conveyed water,
**characterized in**
**that** the heater is designed for heating the supplied water to either a first target temperature or a second target temperature, which is different from the first target temperature,
**that** the path selection device (20) is designed to choose the softening path (56) when the heater (30) heats the supplied water to the first target temperature, and that the path selection device (20) is designed to choose the direct path (55) when the heater (30) heats the supplied water to the second target temperature.

2. The beverage preparation apparatus according to claim 1,
wherein the first target temperature is higher than the second target temperature, in particular wherein the first target temperature is above the boiling point of water and the second target temperature is below the boiling point of water.

3. The beverage preparation apparatus according to claim 2,
wherein, in the case of the first target temperature, the prepared fluid at the outlet of the process stage is gaseous, and wherein, in the case of the second target temperature, the prepared fluid at the outlet of the process stage is liquid.

4. The beverage preparation apparatus according to any one of the preceding claims,
which also has a softening device (80) upstream of the process stage (70) for the water to be supplied to the process stage (70).

5. The beverage preparation apparatus according to claim 4,
wherein the upstream softening device (80) is designed to reduce the carbonate hardness of the water to be supplied to the process stage (70) and/or the non-carbonate hardness of the water to be supplied to the process stage (70) to more than 0 mmol/l, preferably to a minimum of 0.7 mmol/l, particularly preferably to a minimum of 1.0 mmol/l.

6. The beverage preparation apparatus according to any one of the preceding claims,
wherein the process stage softening device (90) is designed to reduce the carbonate hardness of the fluid exiting the process stage (70) and/or the non-carbonate hardness of the fluid exiting the process stage (70) to less than 0.7 mmol/l, preferably to substantially 0 mmol/l.

7. The beverage preparation apparatus according to claim 4 or 5,
wherein the upstream softening device (80) is arranged in or on a water container (10) of the beverage preparation apparatus, and/or wherein a softening-active part of the upstream softening device (80) is exchangeable and/or regenerable.

8. The beverage preparation apparatus according to any one of the preceding claims,
wherein the process stage softening device (90) is integrated in the process stage (70) in a maintenance-free manner for the service life of the beverage preparation apparatus.

9. The beverage preparation apparatus according to any one of claims 1 to 7,
wherein a softening-active part of the process stage softening device (90) is exchangeable and/or regenerable.

10. The beverage preparation apparatus according to any one of the preceding claims,
wherein the beverage preparation apparatus allows an operator to select a product to be prepared or a product sequence to be prepared from a number of products each having a different beverage temperature of the fluid to be dispensed,
wherein the beverage preparation apparatus is designed to specify, for the process stage (70), either the first target temperature or the second target temperature depending on the beverage temperature.

11. The beverage preparation apparatus according to any one of the preceding claims,
which also has a signalling device designed to determine whether a criterion for exchanging and/or regenerating the upstream softening device (80) and/or the process stage softening device (90) is met, and, when it is determined that the criterion is met, to output a corresponding signal, in particular to an operator.

12. The beverage preparation apparatus according to any one of the preceding claims,
wherein the beverage preparation apparatus is a coffee machine, in particular a fully automatic coffee machine.

13. A method for operating a beverage preparation apparatus,
which beverage preparation apparatus comprises a process stage (70), which is designed to convey and to heat supplied water and to dispense a prepared fluid, and a path selection device (20) for selectively choosing a direct path (55) for the conveyed water or a softening path (56) comprising a process stage softening device (90) for the conveyed water, wherein a heater (30) for heating the supplied water is arranged downstream of the path selection device (20),
**characterized in**
**that** either the following steps (A) or the following steps (B) are carried out alternatively:
(A) choosing the softening path (56) by means of the path selection device (20) and conveying supplied water via the softening path (56) to the heater (30), wherein the water conveyed via the softening path (56) is softened by means of the process stage softening device (90) and is then heated by means of the heater (30) to a first target temperature; or
(B) choosing the direct path by means of the path selection device (20) and conveying supplied water via the direct path to the heater (30), wherein the water conveyed via the direct path is heated by means of the heater (30) to a second target temperature, wherein the second target temperature is different from the first target temperature.

14. The method according to claim 13, wherein
the first target temperature is higher than the second target temperature, in particular wherein the first target temperature is above the boiling point of water and the second target temperature is below the boiling point of water.

## Revendications

1. Dispositif de préparation de boissons, en particulier machine à café, équipé d'un niveau de traitement (70) pour convoyer et faire chauffer de l'eau acheminée et distribuer un fluide préparé,
dans lequel le niveau de traitement (70) présente un réchauffeur (30) pour chauffer l'eau acheminée ainsi qu'un dispositif de sélection de voie (20) pour le choix sélectif d'une voie directe (55) pour l'eau convoyée ou d'une voie d'adoucissement (56) comportant un dispositif d'adoucissement de niveau de traitement (90) pour l'eau convoyée,
**caractérisé en ce que**
le réchauffeur est conçu pour chauffer l'eau acheminée au choix à une première température théorique ou à une seconde température théorique différente de celle-ci, que le dispositif de sélection de voie (20) est conçu pour sélectionner la voie d'adoucissement (56) lorsque le réchauffeur (30) chauffe l'eau acheminée à la première température théorique, et
que le dispositif de sélection de voie (20) est conçu pour sélectionner la voie directe (55) lorsque le réchauffeur (30) chauffe l'eau acheminée à la seconde température théorique.

2. Dispositif de préparation de boissons selon la revendication 1,
dans lequel la première température théorique est supérieure à la seconde température théorique, en particulier la première température théorique est supérieure à la température d'ébullition de l'eau et la seconde température théorique est inférieure à la température d'ébullition de l'eau.

3. Dispositif de préparation de boissons selon la revendication 2,
dans lequel, à la première température théorique, le fluide préparé est gazeux à la sortie du niveau de traitement et, à la seconde température théorique, le fluide préparé est liquide à la sortie du niveau de traitement.

4. Dispositif de préparation de boissons selon une des revendications précédentes,
dans lequel un dispositif d'adoucissement (80) situé en amont du niveau de traitement (70) présente de l'eau à acheminer pour le niveau de traitement (70).

5. Dispositif de préparation de boissons selon la revendication 4,
dans lequel le dispositif d'adoucissement (80) situé en amont est conçu pour réduire la dureté carbonatée de l'eau à acheminer au niveau de traitement (70) et/ou la dureté non carbonatée de l'eau à acheminer au niveau de traitement (70) à plus de 0 mmol/l, de préférence à un minimum de 0,7 mmol/l.

6. Dispositif de préparation de boissons selon une des revendications précédentes,
dans lequel dans lequel le dispositif d'adoucissement du niveau de traitement (90) est conçu pour réduire la dureté carbonatée du fluide à évacuer du niveau de traitement (70) et/ou la dureté non carbonatée du fluide à évacuer du niveau de traitement (70) à moins de 0,7 mmol/l, de préférence à substantiellement 0 mmol/l.

7. Dispositif de préparation de boissons selon la revendication 4 ou 5,
dans lequel le dispositif d'adoucissement (80) situé en amont est disposé dans ou au niveau d'un réservoir à eau (10) du dispositif de préparation de boissons, et/ou un élément actif d'adoucissement du dispositif d'adoucissement (80) situé en amont est conçu de manière à être échangeable et/ou régénérable.

8. Dispositif de préparation de boissons selon une des revendications précédentes,
dans lequel le dispositif d'adoucissement du niveau de traitement (90) est intégré dans le niveau de traitement (70) pour toute la durée de vie du dispositif de préparation de boissons sans nécessiter d'entretien.

9. Dispositif de préparation de boissons selon une des revendications 1 à 7,
dans lequel un élément actif d'adoucissement du dispositif d'adoucissement du niveau de traitement (90) est conçu de manière à être échangeable et/ou régénérable.

10. Dispositif de préparation de boissons selon une des revendications précédentes,
dans lequel le dispositif de préparation de boissons permet une sélection d'un produit à préparer ou d'une succession de produits à préparer parmi une pluralité de produits respectivement à une température de boisson différente de celle du fluide à distribuer par un utilisateur,
le dispositif de préparation de boissons est conçu pour prédéfinir pour le niveau de traitement (70) soit la première température théorique, soit la seconde température théorique en fonction de la température de la boisson.

11. Dispositif de préparation de boissons selon une des revendications précédentes,
qui présente en outre un dispositif de signalisation qui est conçu pour établir si un critère d'échange et/ou de régénération du dispositif d'adoucissement situé en amont (80) et/ou du dispositif d'adoucissement du niveau de traitement (90) est rempli et, s'il est constaté que ce critère est rempli, pour émettre un signal correspondant, en particulier en direction d'un utilisateur.

12. Dispositif de préparation de boissons selon une des revendications précédentes,
dans lequel le dispositif de préparation de boissons est une machine à café, en particulier un distributeur automatique de café.

13. Procédé d'utilisation d'un dispositif de préparation de boissons,
lequel dispositif de préparation de boissons comprend un niveau de traitement (70) pour convoyer et faire chauffer de l'eau acheminée et distribuer un fluide préparé et un dispositif de sélection de voie (20) pour le choix sélectif d'une voie directe (55) pour l'eau convoyée ou d'une voie d'adoucissement (56) comportant un dispositif d'adoucissement de niveau de traitement (90) pour l'eau convoyée, le dispositif de sélection de voie (20) étant situé en amont d'un réchauffeur (30) conçu pour chauffer l'eau acheminée, **caractérisé en ce que**,
alternativement, les étapes suivantes (A () ou les étapes suivantes B) sont réalisées :
(A) sélection de la voie d'adoucissement (56) au moyen du dispositif de sélection de voie (20) et convoyage d'eau acheminée par la voie d'adoucissement (56) vers le réchauffeur (30), l'eau convoyée par la voie d'adoucissement (56) étant adoucie au moyen du dispositif d'adoucissement de niveau de traitement (90) puis chauffée au moyen du réchauffeur (30) à une première température théorique ; ou
(B) sélection de la voie directe (55) au moyen du dispositif de sélection de voie (20) et convoyage d'eau acheminée par la voie directe vers le réchauffeur (30), l'eau convoyée par la voie directe au moyen du réchauffeur (30) étant chauffée à une seconde température théorique.

14. Procédé selon la revendication 13,
dans lequel la première température théorique est supérieure à la seconde température théorique, en particulier la première température théorique est supérieure à la température d'ébullition de l'eau et la seconde température théorique est inférieure à la température d'ébullition de l'eau.
